# EUROPÄISCHE PATENTANMELDUNG

(11) **EP 1 197 894 A2**
(43) Veröffentlichungstag der Anmeldung: **17.04.2002**
(21) Anmeldenummer: 01122300.5
(22) Anmeldetag: 18.09.2001
(51) Int. Cl.: G06F 17/60

(54) **Vorrichtung und Verfahren zum Ermitteln mindestens eines gespeicherten Produkts und/oder mindestens eines gespeicherten Lösungsprinzips, Produktions- und Infrastrukturplanungseinrichtung, Computerlesbares Speichermedium und Computerprogramm-Element**

(30) Priorität: 18.09.2000 DE 10046116
(71) Anmelder: Drunk, Gerhard, Dr.-Ing., 81667 München (DE)
(72) Erfinder: Drunk, Gerhard, Dr.-Ing., 81667 München (DE)
(74) Vertreter: Viering, Jentschura & Partner

(57) **Zusammenfassung**

Es wird eine Anwendung aus einer Menge vorgegebener möglicher Anwendungen ausgewählt. Ferner wird mindestens ein möglicher gespeicherter Anforderungsparameter aus einer Mehrzahl von Anforderungsparametern, die der ausgewählten Anwendung zugeordnet sind, ausgewählt. Zu dem ausgewählten Anforderungsparameter wird mindestens ein Anforderungsparameterwert ermittelt. Unter Berücksichtigung der ausgewählten Anwendung und des mindestens einen Anforderungsparameterwerts wird mindestens ein Produkt und/oder ein Lösungsprinzip, welches in einer Datenbank gemeinsam mit mindestens einem dem jeweiligen Produkt zugeordneten Produktparameter bzw. einem dem jeweiligen Lösungsprinzip zugeordneten Lösungsparameter, dem jeweils mindestens ein Produktparameterwert bzw. ein Lösungsparameterwert zugeordnet ist, gespeichert ist, ermittelt. Das Ermitteln erfolgt durch Vergleich des mindestens einen ausgewählten Anforderungsparameterwerts mit dem gespeicherten Produktparameterwert bzw. dem gespeicherten Lösungsparameterwert.

## Beschreibung

Die Erfindung betrifft eine Vorrichtung und ein Verfahren zum Ermitteln mindestens eines gespeicherten Produkts und/oder mindestens eines gespeicherten Lösungsprinzips.

Ist einem ein Produkt suchenden Benutzer ein anzuwendendes Lösungsprinzip und mindestens eine Bezeichnung mindestens einer nach diesem Lösungsprinzip arbeitenden Produktklasse bekannt, welche Produktklasse mindestens ein Produkt enthält, so sind für diesen Fall Vorrichtungen bzw. Verfahren zum Ermitteln von Produkten anhand der Auswahl einer Produktklasse und der Eingabe von Produktparameterwerten für eine Menge das Produkt charakterisierender Produktparameterwerte, bekannt.

Bei dieser bekannten Vorgehensweise zum Ermitteln mindestens eines gespeicherten Produkts wird eine Menge verfügbarer und damit auswählbarer Produkte in einer Datenbank gespeichert.

Die Produkte sind jeweils einer Produktklasse zugeordnet, wobei unter einer Produktklasse in diesem Zusammenhang zu verstehen ist eine Gruppe von Produkten, die nach dem gleichen Lösungsprinzip wirken und durch eine gemeinsame Benennung gekennzeichnet sind.

Unter einem Produkt ist in diesem Zusammenhang ein konkretes Produkt eines Lieferanten mit definierten Produkteigenschaften, den Produktparametern, zu verstehen. Unter einem Produkt ist in diesem Zusammenhang auch eine Kombination zueinander passender Einzelkomponenten zu verstehen, beispielsweise eine Einheit aus Messaufnehmer, Messverstärker, Auswerterechner, etc, die nur in ihrer Gesamtheit die jeweilige Aufgabenstellung lösen.

Den einzelnen Produkten sind somit Produkt-Spezifikationsparameter zugeordnet, im Weiteren auch bezeichnet als Produktparameter, die das jeweilige Produkt näher hinsichtlich ihrer Eigenschaften und Funktionen charakterisieren. Jedem Produktparameter ist üblicherweise mindestens ein Produktparameterwert zugeordnet.

Über eine Suchmaske können von einem Benutzer der Vorrichtung Such-Produktparameterwerte eingegeben werden und es wird durch Vergleich der Such-Produktparameterwerte mit den gespeicherten Produktparameterwerten ermittelt, ob ein oder mehrere Produkte Produktparameterwerte aufweisen, die den Such-Produktparameterwerten mit ausreichender Genauigkeit entsprechen.

Kann ein solches Produkt aus den gespeicherten Produkten ermittelt werden, so wird dieses dem Benutzer zur möglichen Auswahl angezeigt und bereitgestellt.

Voraussetzung für den Einsatz dieses Verfahren und dieser Vorrichtung ist jedoch, dass der Benutzer bereits zur Lösung seiner Aufgabenstellung geeignete Lösungsprinzipien und Produktklassen kennt.

In vielen Fällen ist dem Benutzer jedoch nicht bekannt, welche Lösungsprinzipien und damit verbundene Produktklassen für die Lösung seiner durch eine benötigte Funktionalität charakterisierte Aufgabenstellung geeignet sind. In der Regel sind unterschiedliche Lösungsprinzipien und Produktklassen zur Lösung einer Aufgabenstellung verwendbar, welche Lösungsprinzipien und Produktklassen dem Benutzer in der Regel nur teilweise oder gar nicht bekannt sind. Der Benutzer sucht in diesem Fall nach einer Lösung für seine Aufgabenstellung und nicht nach einem konkreten Produkt.

Ob und in welchem Umfang ein Lösungsprinzip und die nach diesem arbeitenden Produktklassen zur Lösung einer Aufgabenstellung geeignet sind, entscheidet sich anhand von Umfang und Anforderungsparameterwerten der geforderten Funktionalität einer Aufgabenstellung. Geforderte Funktionalität einer Aufgabenstellung und Eignungsgrenzwerte von Lösungsprinzipien und nach diesen wirkenden Produktklassen werden jedoch durch unterschiedliche Parameterdimensionen beschrieben. Die fehlende Zuordnungsmöglichkeit von Anforderungsparameterraum der funktional beschriebenen Aufgabenstellung und Eignungsparameterraum der Lösungsprinzipien mit zugehörigen Produktklassen verhindert hier den Einsatz bestehender Datenbank-Suchfunktionen.

Somit liegt der Erfindung das Problem zugrunde, eine Vorrichtung sowie ein Verfahren zum Ermitteln eines Produkts und/oder eines Lösungsprinzips anzugeben, welche geeignet eingesetzt werden können selbst in einem Fall, dass dem Benutzer nicht bekannt ist, welche Lösungsprinzipien und/oder Produktklassen zur Lösung seiner Aufgabenstellung geeignet sind.

Das Problem wird durch die Vorrichtung sowie das Verfahren zum Ermitteln eines Produkts und/oder eines Lösungsprinzips, die Produktions- und Infrastrukturplanungseinrichtung, das Computerlesbare Speichermedium sowie das Computerprogramm-Element mit den Merkmalen gemäß den unabhängigen Patentansprüchen gelöst.

Eine Vorrichtung zum Ermitteln mindestens eines gespeicherten Produkts und/oder eines gespeicherten Lösungsprinzips weist einen Prozessor auf, der derart eingerichtet ist, dass die im Weiteren beschriebenen Verfahrensschritte durchführbar sind.

Ferner ist ein Speicher vorgesehen, in dem die für das Durchführen des Verfahrens erforderlichen Daten gespeichert sind.

Es wird eine Anwendung aus einer Menge vorgegebener möglicher Anwendungen einem Benutzer zur Auswahl dargestellt und von dem Benutzer ausgewählt.

Unter einem Benutzer ist in diesem Zusammenhang eine Person zu verstehen, die mit Hilfe der Vorrichtung ein Lösungsprinzip und/oder ein Produkt zur Lösung seiner Aufgabenstellung ermittelt.

Unter einem Lösungsprinzip ist in diesem Zusammenhang ein Verfahren oder eine Technologie, etc. zur Lösung einer oder mehrerer Aufgabenstellungen zu verstehen.

Unter einer Anwendung ist in diesem Zusammenhang eine durch eine geforderte Funktionalität beschriebene Aufgabenstellung zu verstehen.

Jeder Anwendung ist jeweils mindestens ein Anforderungsparameter zugeordnet, der die jeweilige Anwendung charakterisiert.

Zu der ausgewählten Anwendung wird in einem weiteren Schritt dem Benutzer mindestens ein Anforderungsparameter dargestellt und von dem Benutzer wird abhängig von der jeweiligen geforderten Funktionalität der ausgewählten Anwendung, die der Benutzer lösen will, zu dem Anforderungsparameter mindestens ein spezifischer Anforderungsparameterwert eingegeben, der einen Suchbereich eines Werteintervalls für den jeweiligen Anforderungsparameter bildet.

Unter einem Parameterwert ist jeweils beispielsweise ein den entsprechenden Parameter charakterisierender Zahlenwert, eine Eigenschaft oder eine Kombination von Eigenschaften zu verstehen.

Weiterhin sind in dem Speicher der Vorrichtung Produkte (Produktangaben) gespeichert gemeinsam mit den Produkten zugeordneten Produktparametern, denen üblicherweise zumindest teilweise Produktparameterwerte zugewiesen sind.

Alternativ oder zusätzlich sind in dem Speicher der Vorrichtung Informationen über Lösungsprinzipien, im Weiteren als Lösungsprinzipien bezeichnet, gespeichert gemeinsam mit den Lösungsprinzipien zugeordneten Lösungsparametern, denen üblicherweise zumindest teilweise Lösungsparameterwerte zugewiesen sind.

Die Lösungsprinzipien sind vorzugsweise technische Lösungsprinzipien beispielsweise aus dem Bereich der Prozesstechnik, der Fertigungstechnik oder auch der Infrastrukturtechnik.

Ein Produktparameter kann beispielsweise das Produkt in seinen technischen Eigenschaften näher charakterisieren oder auch in seiner technischen Anwendbarkeit.

Ein Lösungsparameter kann beispielsweise das Lösungsprinzip in seinen technischen Eigenschaften näher charakterisieren oder auch in seiner technischen Anwendbarkeit.

Zur Vereinfachung der Suche kann die Eignung von Lösungsprinzipien und/oder Produkten für eine Anwendung gekennzeichnet sein.

Abhängig von der ausgewählten Anwendung und des mindestens einen Anforderungsparameterwerts wird mindestens ein Produkt und/oder ein Lösungsprinzip aus der gespeicherten Menge von Produkten und/oder aus der gespeicherten Menge von Lösungsprinzipien ermittelt. Die Ermittlung erfolgt durch Vergleich des mindestens einen ausgewählten Anforderungsparameterwerts mit den gespeicherten Produktparameterwerten und/oder Lösungsparameterwerten.

Alternativ zu dem Prozessor können in der Vorrichtung jeweils einzelne Einheiten vorgesehen sein, die jeweils derart eingerichtet sind, dass einer oder mehrere der oben beschriebenen Verfahrensschritte durchführbar ist/sind.

Die Erfindung kann sowohl mittels eines Computerprogramms, d.h. in Software, als auch mittels einer speziellen elektronischen Schaltung, d.h. in Hardware, implementiert werden.

In einem Computerlesbaren Speichermedium ist ein Computerprogramm zum Ermitteln mindestens eines gespeicherten Produkts und/oder mindestens eines gespeicherten Lösungsprinzips gespeichert, das, wenn es von einem Prozessor ausgeführt wird, die oben beschriebenen Verfahrensschritte aufweist.

Weiterhin ist ein Computerprogramm-Element zum Ermitteln mindestens eines gespeicherten Produkts und/oder mindestens eines gespeicherten Lösungsprinzips vorgesehen, das, wenn es von einem Prozessor ausgeführt wird, die oben beschriebenen Verfahrensschritte aufweist.

Weiterhin ist eine Produktions- und Infrastrukturplanungseinrichtung mit einer oben beschriebenen Vorrichtung vorgesehen.

Bevorzugte Weiterbildungen der Erfindung ergeben sich aus den abhängigen Ansprüchen.

Gemäß einer Ausgestaltung der Erfindung ist eine Liste von einer vorzugsweise in Art eines Thesaurus gespeicherten Menge vorgegebener möglicher Anwendungen vorgesehen, die dem Benutzer dargestellt wird. Aus der Liste kann eine beliebige Anwendung ausgewählt werden.

Anschaulich wird durch diese Ausgestaltung dem Benutzer ein vorgegebenes Schlagwortverzeichnis der auswählbaren Anwendungen bereitgestellt, wodurch die Erfassung der eingegebenen Information in einer vorgegebenen formalen Datenstruktur möglich wird.

Gemäß dieser Ausgestaltung der Erfindung wird eine sehr einfache und damit sowohl kostengünstig realisierbare als auch benutzerfreundliche Möglichkeit dafür angegeben, wie ein Benutzer die funktionale Beschreibung seiner persönlichen Aufgabenstellung erkennen und auswählen kann.

Alternativ ist es ebenso möglich, dass über eine Eingabemaske der Benutzer eine von ihm frei formulierte Aufgabenstellung eingibt und die Vorrichtung mittels eines Parsers, beispielsweise unter Einsatz eines Dialogprogramms, eine zu der formulierten Aufgabenstellung passende Anwendung ermittelt.

Gemäß einer weiteren Ausgestaltung der Erfindung werden die gespeicherten Produktparameter und/oder Lösungsparameter und/oder Anforderungsparameter in einen vorgegebenen Vergleichsraum transformiert, dass ein Vergleich zwischen dem gespeicherten Produktparameter und/oder Lösungsparameter mit dem Anforderungsparameter möglich ist.

Durch diese Transformation wird eine verlässliche, aussagekräftige und automatisierte Vergleichsmöglichkeit zwischen dem jeweiligen Anforderungsparameter und einem Produktparameter und/oder Lösungsparameter ermöglicht.

Der Vergleichsraum weist eine der Anzahl berücksichtigter Anforderungsparameter, Produktparameter bzw. Lösungsparameter entsprechende Anzahl von Dimensionen auf, wobei die Anzahl der Anforderungsparameter, Produktparameter bzw. Lösungsparameter unterschiedlich sein kann. Eine unterschiedliche Anzahl der Anforderungsparameter, Produktparameter bzw. Lösungsparameter wird durch die Transformation in den Vergleichsraum ausgeglichen.

Die transformierten Anforderungsparameterwerte, transformierten Produktparameterwerte bzw. transformierten Lösungsparameterwerte stellen jeweils einzelne Werte auf der jeweils durch die Dimension bestimmten Vergleichsraumachse dar.

Der Vergleichsraum kann ein von dem durch die Anforderungsparameter, die Produktparameter bzw. Lösungsparameter jeweils definierten Räume (Anforderungsparameterraum, Produktparameterraum bzw. Lösungsparameterraum) unabhängig definierter Raum sein, in den die Anforderungsparameter, die Produktparameter bzw. Lösungsparameter transformiert werden.

Alternativ kann jedoch der Vergleichsraum auch gleich sein
- dem Produktparameterraum, in dem der mindestens eine gespeicherte Produktparameter beschrieben wird, oder
- dem Lösungsparameterraum, in dem der mindestens eine gespeicherte Lösungsparameter beschrieben wird, oder
- dem Anforderungsparameterraum, in dem der mindestens eine gespeicherte Anforderungsparameter beschrieben wird.

In diesem Fall wird lediglich eine Transformation von Parametern durchgeführt.

Ist beispielsweise der Produktparamterraum der Vergleichsraum, so erfolgt eine Transformation der Anforderungsparameter in den Produktparamterraum, usw.

Gemäß einer weiteren Ausgestaltung der Erfindung ist es vorgesehen, dass sowohl die gespeicherten Produktparameter, die gespeicherten Lösungsparameter als auch die Anforderungsparameter jeweils nur Parameter aus einer vorgegebenen, gespeicherten Menge möglicher zu verwendender Parameter enthalten, welche Parameter den Vergleichsraum bilden.

Die Transformation der Parameterdimensionen von Anforderungsparametern und Produktparametern in eine vergleichbare Dimension in dem Vergleichsraum erfolgt derart, dass anschaulich eine Zuordnung über Metadaten mit durch logischen Inhalt und Normierung gekennzeichneten Metaparametern sowie durch Regeln für die Umrechnung von Normierungen erfolgt.

Dadurch können Anforderungsparameter und Produktparameter und/oder Lösungsparameter einander logisch zugeordnet und in ihren Normierungen gegebenenfalls ineinander umgerechnet werden.

Ein Beispiel einer solchen Transformation ist im Folgenden angegeben:

| | | |
|---|---|---|
| Anforderungsparameter | Werkstückbreite | in cm; |
| Produktparameter | Messbereich | in m; |
| Metaparameter | Distanz in X-Dimension | in mm. |

Die Definition der Metadaten kann auch übereinstimmend mit einheitlich verwendeten Produktparametern erfolgen.

In diesem Zusammenhang ist unter dem Begriff "Parameter" eine Einheit von Parameterinhalt und Normierung, beispielsweise die für den Parameterinhalt zur Eingabe zu verwendende Einheit, beispielsweise m, cm, mm, kg, g, W, kW, etc., zu verstehen. Durch die Normierung wird gewährleistet, dass ein verlässlicher Vergleich zwischen den Anforderungsparameterwerten und den Produktparameterwerten bzw. den Lösungsparameterwerten durchgeführt werden kann.

Durch die Vorgabe anschaulich einer Metadatenstruktur, die eine Menge überhaupt nur zulässiger Parameter enthält, die zur Charakterisierung einer Anwendung und/oder eines Produkts und/oder eines Lösungsprinzips als Anforderungsparameter bzw. Produktparameter und/oder Lösungsparameter verwendet werden können, wird gewährleistet, dass der Vergleich zwischen den Anforderungsparameterwerten und den Produktparameterwerten und/oder den Lösungsparameterwerten möglich wird.

Weiterhin kann eine Mehrzahl von Anforderungsparametern dem Benutzer dargestellt werden und eine Mehrzahl von Anforderungsparameterwerten ermittelt werden. Den Produkten und/oder Lösungsprinzipien kann ferner eine Mehrzahl von Produktparametern mit Produktparameterwerten und/oder Lösungsparametern mit Lösungsparameterwerten zugeordnet sein. Der Vergleich kann in diesem Fall derart erfolgen, dass bei mangelnder Erfüllung eines Anforderungsparameterwerts durch ein Produkt bzw. dessen entsprechenden Produktparameterwerts und/oder durch ein Lösungsprinzip bzw. dessen entsprechenden Lösungsparameterwerts die Abweichung des entsprechenden Anforderungsparameterwerts von dem Produktparameterwert bzw. Lösungsparameterwert gemäß einer vorgegebenen Gewichtungsverteilung gewichtet wird und im Weiteren, dass ein gewichtetes Vergleichsergebnis ermittelt wird.

Auf diese Weise wird es möglich, die einzelnen Einflussfaktoren, d.h. die unterschiedlichen Anforderungsparameter und/oder die Produktparameter und/oder die Lösungsparameter in ihrer Bedeutung hinsichtlich einer Anwendung unterschiedlich zu gewichten. Damit wird eine weitere Verbesserung des Ermittlungsergebnisses hinsichtlich seiner Verlässlichkeit erreicht.

In einer weiteren Ausgestaltung der Erfindung ist es vorgesehen, dass dem Benutzer diejenigen Anforderungsparameter und Anforderungsparameterwerte, die durch ein jeweiliges Produkt bzw. ein, vorzugsweise technisches, Lösungsprinzip nicht oder nicht ausreichend erfüllt werden, dem Benutzer der Vorrichtung zusammen mit den zugehörigen Produktparameterwerten bzw. Lösungsparameterwerten angezeigt werden. Weiterhin können die Ursachen für die Nichterfüllung ebenfalls zusätzlich oder alternativ dem Benutzer dargestellt werden.

Gemäß einer Weiterbildung der Erfindung ist es ferner vorgesehen, dass nur diejenigen Produkte und/oder Lösungsprinzipien beim Vergleich berücksichtigt werden, die für die ausgewählte Anwendung als geeignet gekennzeichnet sind.

Durch diese Weiterbildung wird der Vergleich erheblich schneller und weniger rechenintensiv und damit kostengünstiger durchführbar.

Gemäß einer weiteren Ausgestaltung der Erfindung ist es vorgesehen, dass zumindest ein Teil der Anforderungsparameter gruppiert ist in mindestens einen Hauptanforderungsparameter und mindestens einen Unteranforderungsparameter, und dass für den Fall, dass der Hauptanforderungsparameter ausgewählt wird, abhängig von dem ausgewählten Hauptanforderungsparameter mindestens ein Unteranforderungsparameter als Anforderungsparameter ausgewählt wird.

Hierdurch wird eine Abfrage von in dieser Hauptanforderung nicht notwendigen Unteranforderungsparametern vermieden.

Auch durch diese Ausgestaltung wird der Vergleich erheblich schneller und weniger rechenintensiv und damit kostengünstiger durchführbar.

Weiterhin können zumindest einem Teil der Anforderungsparameter vorgegebene Kostentreiber und Grenzwerte für Kostensprünge (Kostengrenzwerte) bezogen auf die Anforderungsparameterwerte zugeordnet werden. Die Kostentreiber und/oder die Grenzwerte werden dem Benutzer dargestellt, um ihm eine schnelle, einfache und übersichtliche Einschätzung zu ermöglichen, welche Anforderungsparameter hinsichtlich der zu erwartenden Kosten bei der Lösung der Aufgabenstellung einen größeren bzw. kleineren Einfluss haben.

Auf diese Weise wird die Gefahr der Überspezifikation durch den Benutzer reduziert und damit die Erfolgswahrscheinlichkeit der Suche erhöht.

Weiterhin kann zumindest einem Teil der Anwendungen eine oder mehrere Unteranwendungen zugeordnet sein, die eine weitere Flexibilisierung und detailliertere Auswahl bzw. Beschreibung der Anwendung ermöglichen.

Gemäß dieser Weiterbildung wird eine Unteranwendung aus einer Menge vorgegebener möglicher Unteranwendungen der ausgewählten Anwendung ausgewählt und es wird mindestens ein möglicher gespeicherter Anforderungsparameter aus einer Mehrzahl von Anforderungsparametern, die der ausgewählten Anwendung und Unteranwendung zugeordnet sind, ausgewählt, wobei jeder Anforderungsparameter die jeweilige Anwendung und/oder die Unteranwendung charakterisiert. Unter Berücksichtigung der ausgewählten Anwendung und der Unteranwendung und des mindestens einen Anforderungsparameterwerts wird mindestens ein Produkt ermittelt.

Weiterhin kann zumindest
- ein Teil der Anforderungsparameter, und/oder
- ein Teil der Lösungsparameter, und/oder
- ein Teil der Produktparameter, und/oder
- ein Teil von Relationen zwischen zumindest einem Anforderungsparameter und einem Lösungsparameter und/oder zwischen zumindest einem Anforderungsparameter und einem Produktparameter, und/oder
- die Art der Transformation in den Vergleichsraum und/oder
- zumindest ein Teil der Gruppierungen, und/oder
- zumindest ein Teil der Gewichtungen, und/oder
- zumindest ein Teil der Kostentreiber und Kostengrenzwerte,
frei von einem Benutzer und/oder einem Betreiber konfigurierbar sein.

Im Rahmen der Erfindung ist unter einer freien Konfigurierbarkeit im Rahmen von Hardware beispielsweise das Einstellen von Schalterstellungen und das Definieren von Verbindungen zwischen einzelnen Schaltungskomponenten zu verstehen, im Rahmen von Software beispielsweise die Eingabe von Werten in eine strukturierte Parametermaske oder die Vorgabe durch eine graphische oder textuelle Konfigurierungssprache zu verstehen.

Unter einem Betreiber ist in diesem Zusammenhang eine Person zu verstehen, welche die Vorrichtung für den Benutzer zur Verfügung stellt und die Wirkungsweise der Ermittlung programmiert bzw. konfiguriert.

Durch diese Ausgestaltung wird die Flexibilität der Vorrichtung in der Weise erheblich erhöht, dass ein Betreiber die Suchalgorithmen auf einer Bedienoberfläche eingeben kann, die keinerlei Veränderung des Programmcodes erfordert.

Die Erfindung eignet sich insbesondere zum Einsatz im Bereich der Fertigungsautomatisierung, der Prozessautomatisierung oder der Infrastrukturautomatisierung.

Ein Ausführungsbeispiel der Erfindung ist in den Figuren dargestellt und wird im Weiteren näher erläutert.

Es zeigen
- Figur 1: ein Blockdiagramm, in dem die einzelnen Komponenten eines Ausführungsbeispiels der Erfindung dargestellt sind;
- Figur 2: ein Blockdiagramm, in dem die Vorgehensweise zum Ermitteln eines Produkts gemäß dem Ausführungsbeispiel der Erfindung dargestellt ist;
- Figur 3: ein Blockdiagramm, in dem die Vorgehensweise zum Ermitteln eines Produkts gemäß dem Ausführungsbeispiel der Erfindung dargestellt ist;
- Figur 4: eine Darstellung einer Bildschirmmaske zur Eingabe der Anwendung mit Auswahl des Suchgebiets, Anwendungsauswahl und Hauptanforderungsparameter-Auswahl;
- Figur 5: eine Darstellung einer Bildschirmmaske zur Eingabe von Anforderungsparameterwerten;
- Figur 6: eine Darstellung einer Bildschirmmaske zur Eingabe der Anforderungsparameterwerte, wobei schon einige Anforderungsparameterwerte eingegeben worden sind;
- Figur 7: eine Darstellung einer Bildschirmmaske, in der ermittelte Produkte dargestellt sind mit Darstellung der jeweiligen Lösungsprinzipien, dargestellt als Produktklasse und der gewichteten Abweichung (Erfüllungsgrad);
- Figur 8: eine Darstellung einer Bildschirmmaske, in der ermittelte Produkte dargestellt sind, wobei einige Produkte zur detaillierten Informationsdarstellung ausgewählt sind;
- Figur 9: eine Darstellung einer Bildschirmmaske, in der die für die ausgewählten Produkte der gewünschte Informationsweg durch den Benutzer gewählt werden kann sowie der Anfragehintergrund eingegeben wird, dargestellt sind;
- Figur 10: eine Darstellung einer Bildschirmmaske, in der einzelne Metaparameter in dem Konfigurator dargestellt sind;
- Figur 11: eine Darstellung einer Bildschirmmaske, in der einzelne Produktparameter und Produktparameterwerte zu einem gespeicherten Produkt dargestellt sind;
- Figur 12: eine Darstellung einer Bildschirmmaske, in der einzelne Relationen zwischen einer Anwendung und der der Anwendung zugeordneten Unteranwendung im Konfigurator dargestellt sind;
- Figur 13: eine Darstellung einer Bildschirmmaske, in der die Konfigurierung einer Parametertransformation für die Ermittlung von Lösungsprinzipien und/oder Produkten im Konfigurator dargestellt ist;
- Figur 14: eine Darstellung einer Bildschirmmaske, in der die Konfigurierung aller Parametertransformationen für die Ermittlung von Lösungsprinzipien und/oder Produkten für eine Anwendung im Konfigurator dargestellt ist;
- Figur 15: ein Blockdiagramm eines Rechners, mit dem das Verfahren gemäß einem Ausführungsbeispiel durchgeführt wird;

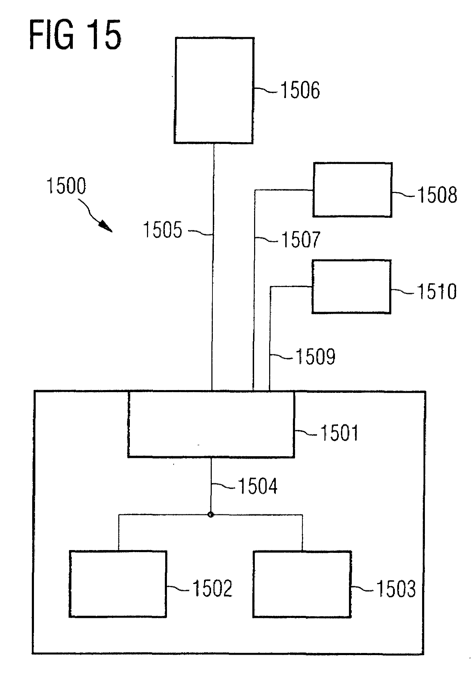

**Fig.15** zeigt einen Computer 1500
- mit einer Eingangs-/Ausgangsschnittstelle 1501,
- mit einem Prozessor 1502,und
- mit einem Speicher 1503,
die über einen Computerbus 1504 miteinander gekoppelt sind.

Der Computer 1500 ist über ein erstes Kabel 1505 mit einem Bildschirm 1506, über ein zweites Kabel 1507 mit einer Tastatur 1508 sowie über ein drittes Kabel 1509 mit einer Computermaus 1510 verbunden.

In dem Speicher sind eine Mehrzahl von Datenbanken sowie ein Datenbank-Anwendungsprogramm, gemäß diesem Ausführungsbeispiel Postgres™, gespeichert.

Die im weiteren beschriebenen Datenbank-Daten werden unter Verwendung des Datenbank-Anwendungsprogramm in einer jeweiligen Datenbank gespeichert und verwaltet, d.h. beispielsweise abgefragt.

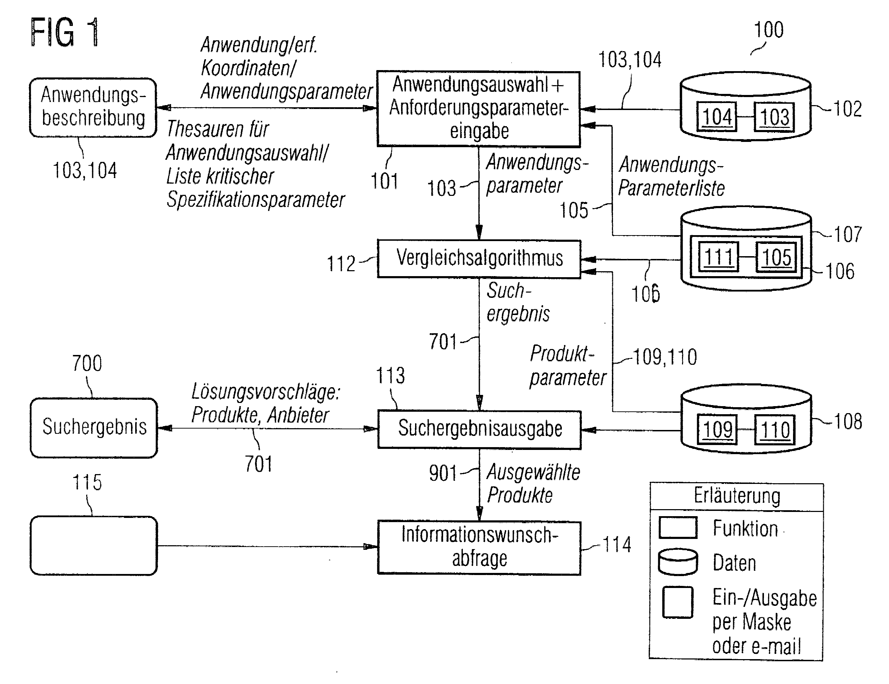

**Fig.1** zeigt ein Blockdiagramm 100, anhand der die einzelnen logischen Komponenten der Vorrichtung erläutert werden.

Von einer Anwendungsauswahl-Einheit 101 werden in einer ersten Datenbank 102 gespeicherte Anwendungen 103 und deren funktionale Beschreibung sowie Anforderungsparameter 104 einem Benutzer der Vorrichtung über den Bildschirm 1506 dargestellt.

Unter einer Anwendung ist in diesem Zusammenhang eine, vorzugsweise technische, Aufgabenstellung zu verstehen, für die eine Lösung zu ermitteln ist in Form eines Lösungsprinzip-Vorschlags und/oder Produktvorschlags von Produkten, die aufgrund der Aufgabenstellung geeignet erscheinen, dieses Problem zu lösen.

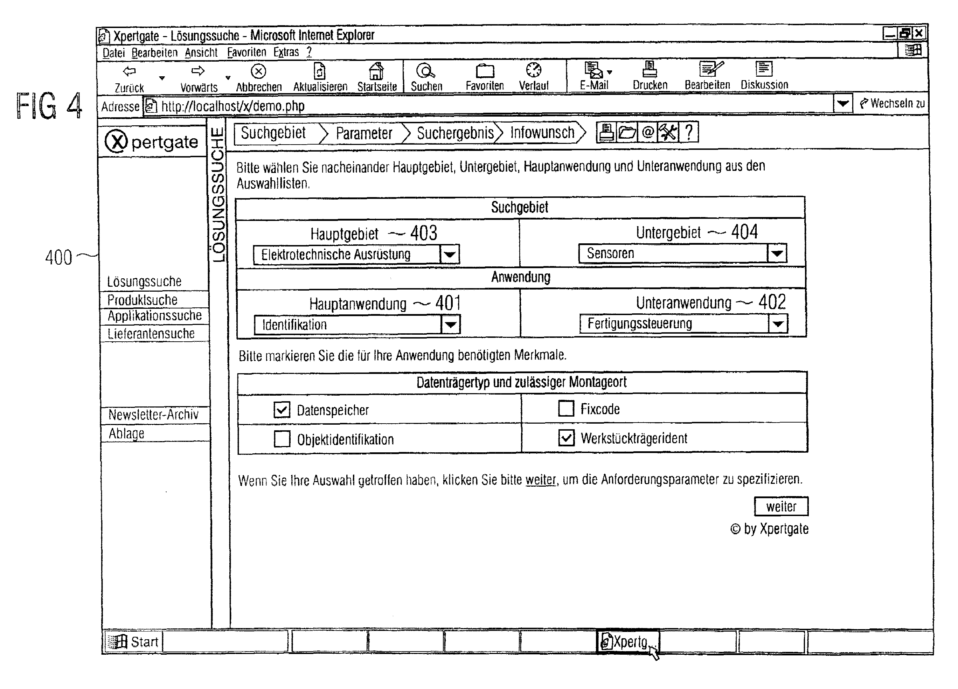

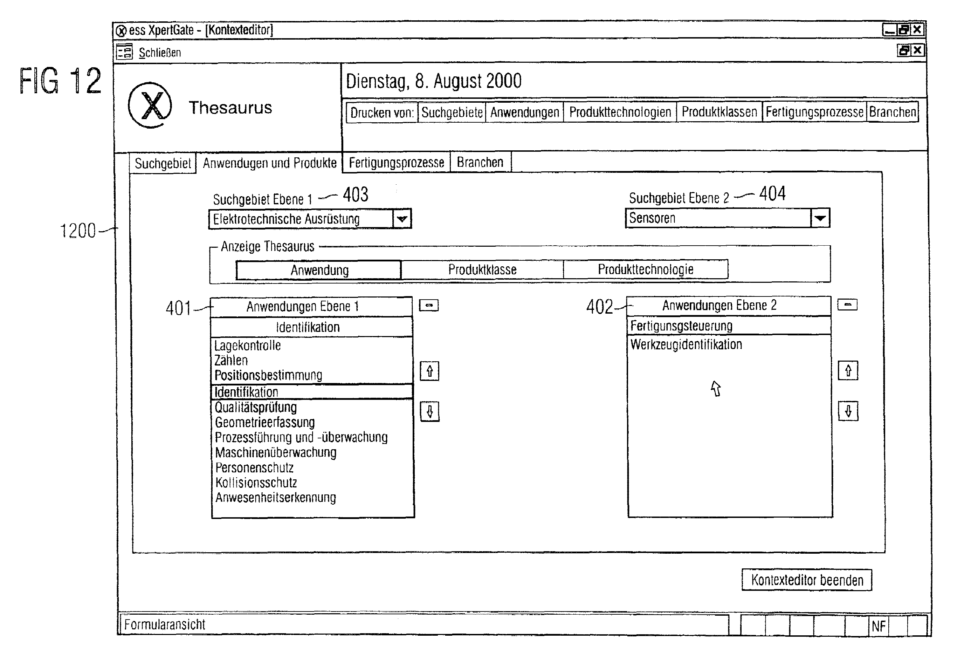

Im Bereich der Fertigungsautomatisierung sind gemäß diesem Ausführungsbeispiel folgende technische Aufgabenstellungen als Hauptanwendung 401 vorgesehen (vgl. Bildschirmmaske 400 **Fig.4** und Bildschirmmaske 1200 in **Fig.12**) :
- Lagekontrolle eines Werkstücks (1201),
- Funktion "Zählen",
- Positionsbestimmung eines Werkstücks,
- Identifikation eines Werkstücks,
- Qualitätsprüfung eines Werkstücks,
- Geometrieerfassung eines Werkstücks,
- Prozessführung- und Überwachung,
- Maschinenüberwachung,
- Personenschutz,
- Kollisionsschutz,
- Anwesenheitserkennung.

Allgemein kann jede technische Aufgabenstellung als Anwendung vorgegeben werden, je nach benötigtem Einsatzgebiet.

Weiterhin sind den einzelnen Hauptanwendungen 401 jeweils zumindest teilweise Unteranwendungen 402 zugeordnet, gemäß diesem Ausführungsbeispiel der Hauptanwendung "Identifikation eines Werkstücks" die Unteranwendungen:
- Fertigungssteuerung, und
- Werkzeugidentifikation.

Den Hauptanwendungen 401 und/oder den Unteranwendungen 402 sind Anforderungsparameter zugeordnet. Die zulässigen Anforderungsparameter 105 können einer Hauptanwendung 401 und/oder einer Unteranwendung 402 zugeordnet werden. Die zulässigen Anforderungsparameter 105 sind in einer formalen vorgegebenen Datenstruktur als Metadaten 106 in einer zweiten Datenbank 107 gespeichert.

Es können nur Anforderungsparameter definiert werden und den Hauptanwendungen 401 und/oder den Unteranwendungen 402 zugeordnet werden, die in der Liste der zulässigen Anforderungsparameter 105 als Teil der Metadaten 106 gespeichert sind.

Weiterhin sind als dem Benutzer zur Auswahl bereitgestellte Suchkriterien ein technisches Hauptgebiet 403 sowie zu dem jeweiligen technischen Hauptgebiet 403 mindestens ein technisches Untergebiet 404 als der Anwendungsauswahl vorausgehende Eingrenzung vorgesehen.

Beispiele für mögliche technische Hauptgebiete 403 sind:
- Elektrotechnische Ausrüstung,
- Mechanische Ausrüstung,
- Software-Systeme,
- Dienstleistungen.

Beispiele für mögliche technische Untergebiete 404 des technischen Hauptgebiets 403 "Elektrotechnische Ausrüstung" sind:
- Sensoren,
- Steuerungen,
- Einrichtungen zum Bedienen und Beobachten,
- Bussysteme,
- Antriebe,
- etc.

Ferner sind in einer dritten Datenbank 108 Produktangaben eines Produktes mit den den Produkten zugeordneten Produktparametern 110 und Produktparameterwerten 109 gespeichert.

Die zulässigen Produktparameter 111, die einem Produkt zugeordnet werden kann, sind in einer formalen vorgegebenen Datenstruktur ebenfalls als Metadaten 106 in der zweiten Datenbank 107 gespeichert.

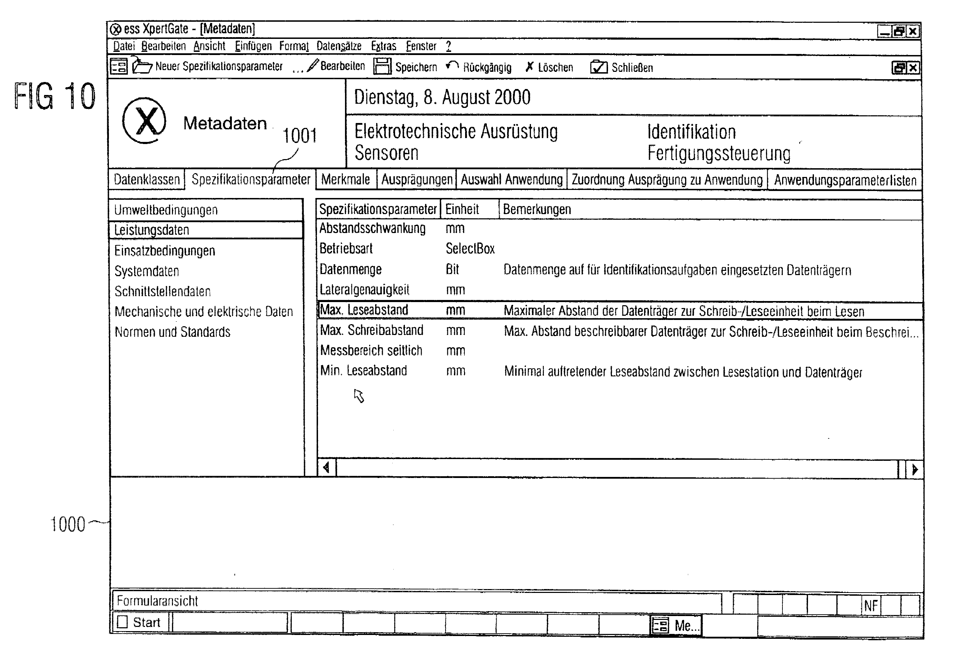

**Fig.10** zeigt eine Bildschirmmaske 1000, in der im Konfigurator die Metaparameter definiert werden, die wiederum mit den zulässigen Produktparametern 1001 übereinstimmen.

Gemäß diesem Ausführungsbeispiel sind die Metaparameter über Datenklassen in eine vorgebbare Anzahl von Hierarchieebenen gruppiert.

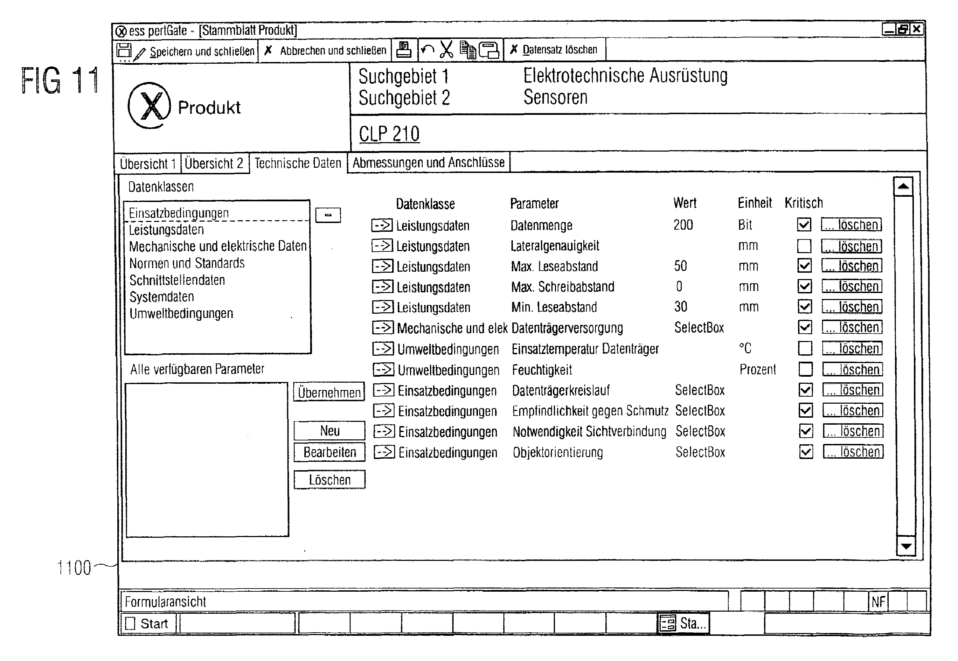

In **Fig.11** sind ferner in einer weiteren Bildschirmmaske 1100 die dem jeweiligen Produkts als Produktparameter und Produktparameterwerte zugeordneten technischen Daten dargestellt.

Gemäß diesem Ausführungsbeispiel sind die einzelnen Produkte vorgegebenen Produktklassen zugeordnet.

Es können nur Produktparameter 110 definiert werden und den Hauptanwendungen 401 und/oder den Unteranwendungen 402 zugeordnet werden, die in der Liste der zulässigen Metadaten 106 gespeichert sind.

Ferner werden den einzelnen Produktparametern 110 Produktparameterwerte zugewiesen, die die jeweiligen Produkte in ihren Eigenschaften näher charakterisieren.

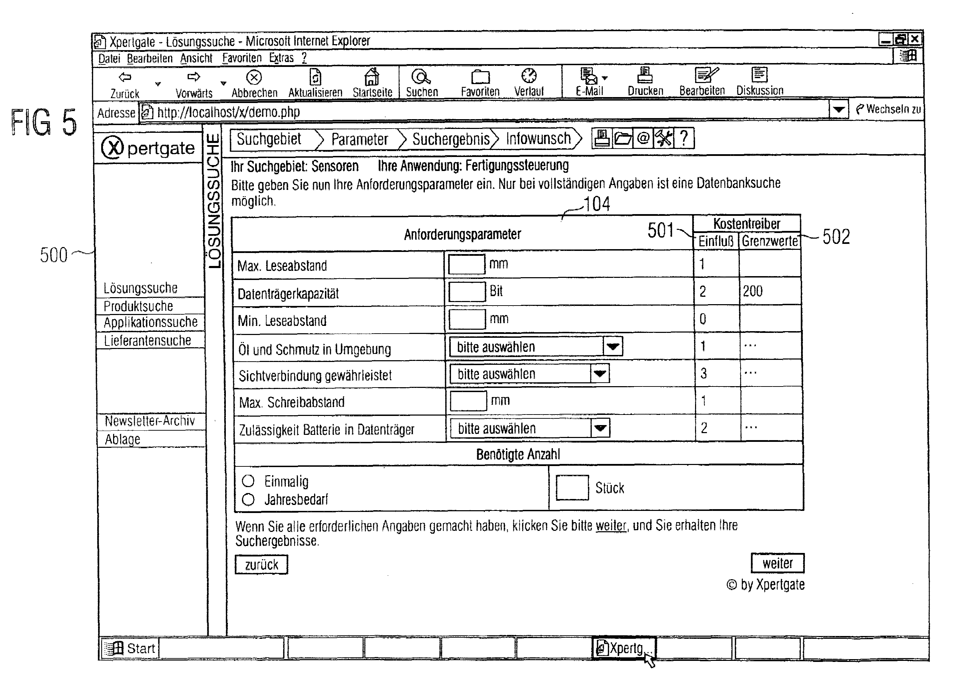

Wählt der Benutzer jeweils eine Hauptanwendung 401, eine Unteranwendung 402, ein technisches Hauptgebiet 403 und ein technisches Untergebiet 404 aus, so wird dem Benutzer nach der entsprechenden Eingabe der ausgewählten Daten eine weitere Bildschirmmaske 500 dargestellt, wie in **Fig.5** gezeigt, in der der entsprechenden Anwendung (ausgewählte Hauptanwendung 401 und Unteranwendung 402) zugeordnete Anforderungsparameter 103 aufgeführt sind.

Wie in **Fig.4** gezeigt ist, werden einige Anforderungsparameter schon gemeinsam mit den Hauptanwendungen, den Unteranwendungen, den technischen Hauptgebieten und den technischen Untergebieten dem Benutzer für eine Vorauswahl von Anforderungsparametern dargestellt und bereitgestellt.

Diese zur Vorauswahl bereitgestellten Anforderungsparameter werden im Weiteren als Hauptanforderungsparameter 405 bezeichnet.

Gemäß diesem Ausführungsbeispiel sind folgende Hauptanforderungsparameter 405 vorgesehen:
- Datenspeicher,
- Objektidentifikation,
- Fixcode,
- Werkstückträgerident.

Gemäß diesem Ausführungsbeispiel ist es vorgesehen, dass die Auswahl der weiteren Anforderungsparameter 104 auch abhängig von den ausgewählten Hauptanforderungsparametern 405 erfolgt.

Der Benutzer wird aufgefordert, zumindest einem Teil der Anforderungsparameter 104 Anforderungsparameterwerte zuzuordnen. Die Anforderungsparameter 104 sind individuell auf die entsprechenden Anwendungen angepasst und diesen zugeordnet.

Die einzelnen Anforderungsparameter 104 sind in ihrer Bedeutung hinsichtlich der jeweiligen Anwendung mit unterschiedlichen Gewichtsfaktoren 501, 1305 für den Fall der Nichterfüllung des jeweiligen Anforderungsparameterwertes durch den entsprechenden Produktparameterwert und/oder Lösungsparameterwert unterschiedlich gewichtet.

Ferner sind einigen Anforderungsparametern 104 Kostentreiber sowie Grenzwerte 502 für kostentreibende Technologiesprünge für die möglichen Anforderungsparameterwerte zugeordnet, um einer Überspezifikation durch den Benutzer weitgehend vorzubeugen. Dadurch wird die Trefferwahrscheinlichkeit der Suche erheblich erhöht und die Kosten der ermittelten Lösungen werden reduziert.

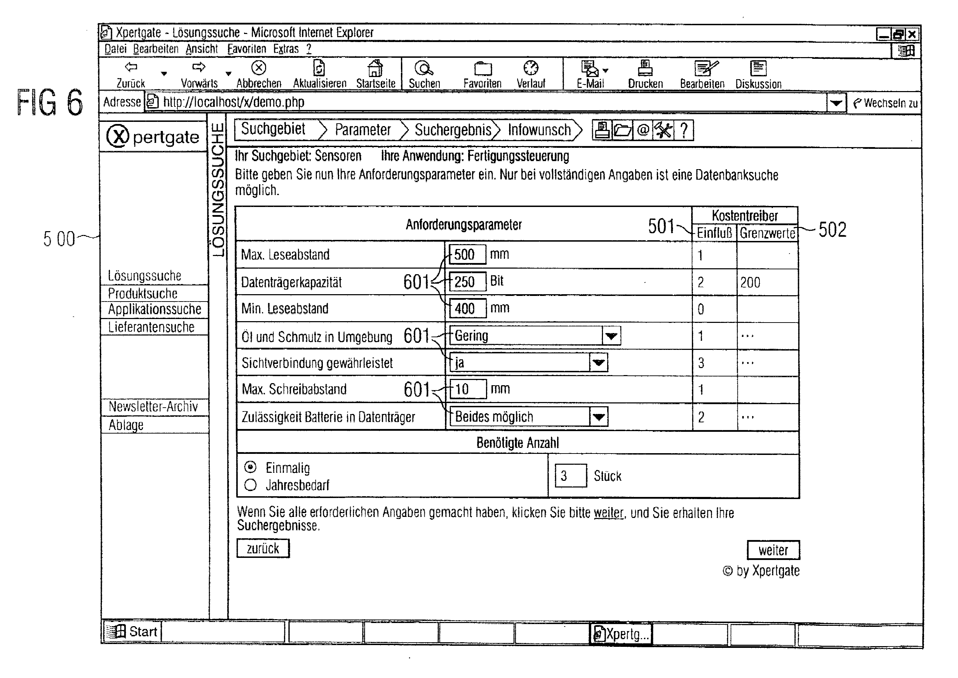

**Fig.6** zeigt die Bildschirmmaske 500 nach Eingabe einiger Anforderungsparameterwerte 601 durch den Benutzer. Ein Anforderungsparameterwert 601 kann ein Zahlenwert, ein Zahlenintervall, ein Auswahlfeld, oder auch eine sprachliche Angabe sein.

Nach erfolgter Eingabe der Anforderungsparameterwerte 601 wird ein Vergleichsverfahren durchgeführt (Block 112), in dessen Rahmen die jeweiligen Produktparameterwerte aller gespeicherten Produkte mit den eingegebenen Anforderungsparameterwerten 601 in der durch die Metadaten 106 vorgegebenen transformierten Form in dem Vergleichsraum verglichen werden.

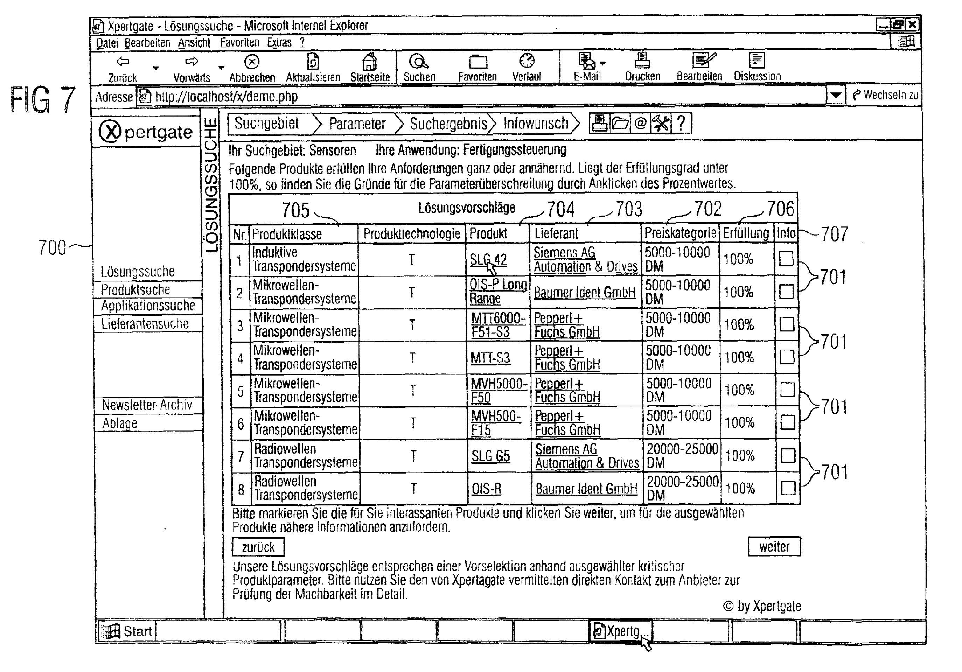

Im Rahmen des Vergleichsalgorithmus werden diejenigen Produkte ausgewählt und als geeignete Produkte 701 zur Lösung der angegebenen Anwendung über eine in **Fig.7** gezeigte Bildschirmmaske 700 dem Benutzer dargestellt (Block 113), deren Produktparameterwerte die transformierten Anforderungsparameterwerte ganz oder teilweise erfüllen.

Zu jedem angezeigten geeigneten Produkt 701 wird ferner eine Preisklassenangabe 702, der Lieferant 703 und der Name 704 des jeweiligen geeigneten Produkts, die den Lösungsprinzipien entsprechenden Produktklassen 705 sowie der Erfüllungsgrad 706, d.h. die Übereinstimmung der jeweiligen Produktparameterwerte mit den eingegebenen Anforderungsparameterwerten, angezeigt.

Weiterhin ist ein Informationsfeld 707 für jedes geeignete Produkt 701 auswählbar angezeigt.

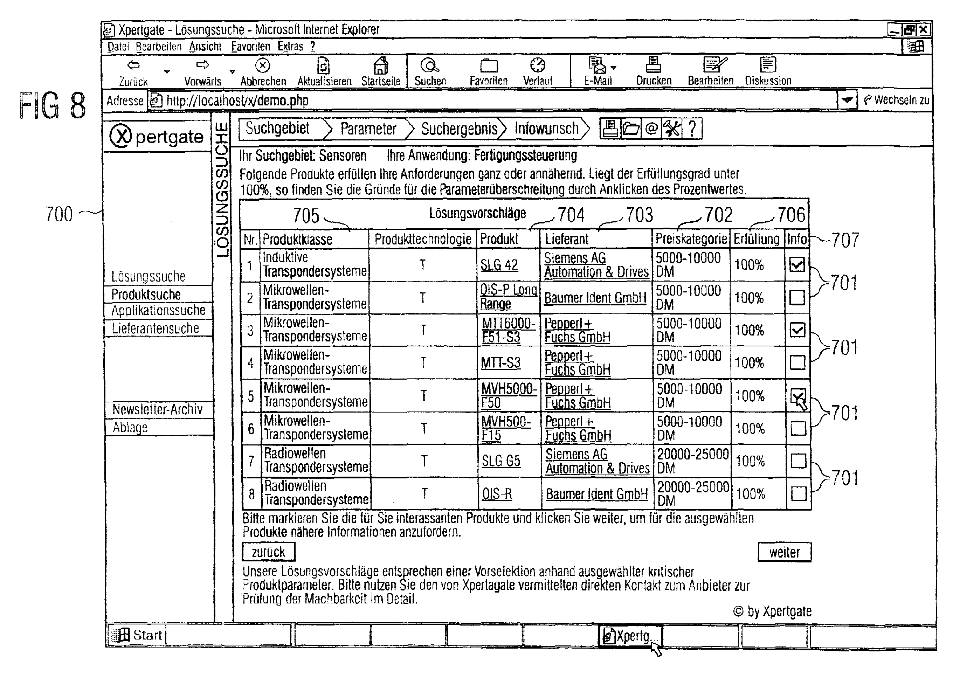

Durch Anklicken des jeweiligen Informationsfeldes 707 wählt der Benutzer diejenigen geeigneten Produkte 701 aus, an denen er näheres Interesse hat (vgl. **Fig.8**).

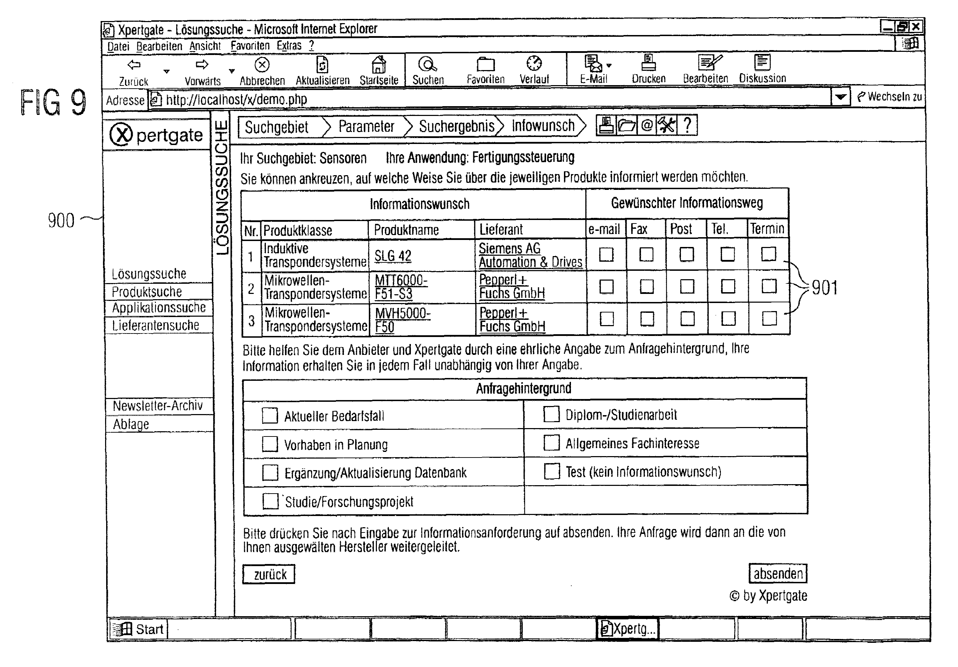

Nach erfolgter Auswahl von Produkten aus den geeigneten Produkten 701 werden in einer weiteren Bildschirmmaske 900 (vgl. **Fig.9**) dem Benutzer die ausgewählten Produkte 901 dargestellt (Block 114) und der Benutzer hat die Möglichkeit, auszuwählen, über welches Medium er die Detailinformation erhalten möchte, beispielsweise per E-Mail, per Telefax, per Post, per Telefon oder über ein persönliches Gespräch zu einem noch abzustimmenden Termin.

Nach eingegebener Medienauswahl 115 wird dem Benutzer die gewünschte Detailinformation mittels des ausgewählten Mediums übertragen.

Es ist anzumerken, dass die einzelnen Datenbanken selbstverständlich auch in einer Datenbank zusammengefasst sein können.

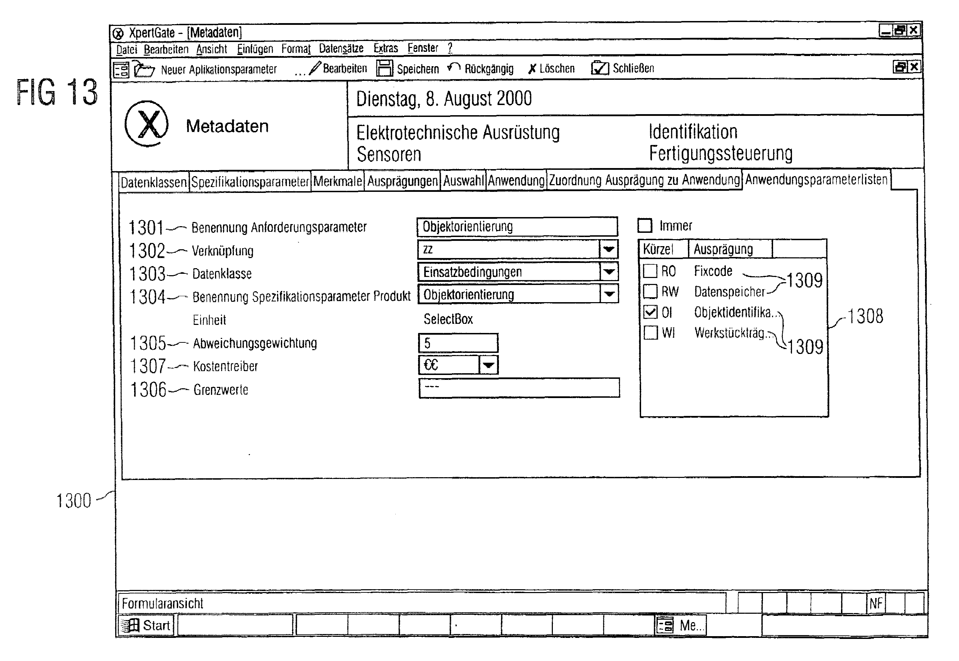

**Fig.13** zeigt eine Bildschirmmaske 1300, über die der Betreiber die Möglichkeit hat, die Transformation eines Anforderungsparameter 1301 selbst zu definieren, d.h. zu konfigurieren.

Die Anforderungsparameter 104 werden somit anschaulich von dem Betreiber mit ihrer Bezeichnung 1301 und ihrer Relation bzw. Transformation 1302 (Verknüpfungsart 1302) zu den festgelegten Metadaten 106, 1304 definiert und damit konfiguriert.

Gemäß diesem Ausführungsbeispiel stimmen die Metaparameter 1304 mit den zulässigen Produktparametern 111 überein.

Den Anforderungsparametern 1301 kann somit eine Verknüpfungsart 1302, d.h. eine Relation zu einem Produktparameter, zugeordnet werden.

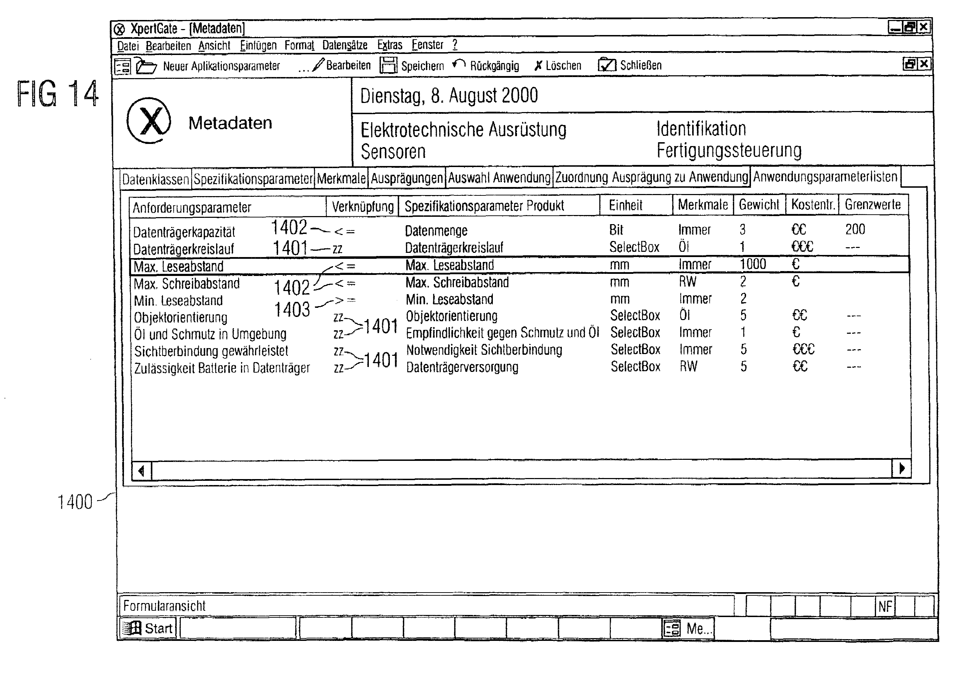

Als Relation 1302 werden gemäß diesem Ausführungsbeispiel verwendet (vgl. Bildschirmmaske 1400 in **Fig.14**):
- eine Identitätsrelation 1401, und/oder
- eine Kleiner-Gleich-Relation 1402, und/oder
- eine Größer-Gleich-Relation 1403, und/oder
- eine Auswahlliste, in der die jeweiligen zulässigen Zustände auswählbar festgelegt sind.

Ferner wird der Anforderungsparameter 1301 mit einer frei gewählten Benennung einer Datenklasse 1303 und einem Metaparameter 1304 in diesem Fall über identisch mit den zulässigen Produktparametern 105 als Metadaten 106 zugeordnet.

Ferner ist anzugeben ein Gewichtungsfaktor 1305, mit dem angegeben wird, wie stark eine Abweichung zwischen dem Anforderungsparameterwert und dem zu vergleichenden Produktparameter zu gewichten ist. Ferner können eine Kostentreiberklasse 1307 sowie Grenzwerte 1306 für kostentreibende Technologiesprünge angegeben werden.

Des Weiteren kann über das Auswahlfeld 1308 eine Gruppierung von Anforderungsparametern als Unteranforderungsparameter zu Hauptanforderungsparametern 1309 vorgenommen werden.

Auf diese Weise wird ein sehr einfacher und verlässlicher Vergleich zwischen den eingegebenen Anforderungsparameterwerten und den Produktparameterwerten möglich.

Die Konfigurierung der Ermittlung zeigen **Fig.10** mit der Eingabe von Metaparametern, **Fig.12** mit der Eingabe möglicher Anwendungen 401 und Unteranwendungen 402, **Fig.13** mit der Eingabe einzelner Parametertransformationen und **Fig.14** mit der gesamtheitlichen Darstellung einer Transformation zwischen den Parameterräumen von Anforderungsparametern und Produktparametern mit Bezug zu einer Anwendung.

In diesem Zusammenhang ist darauf hinzuweisen, dass die freie Konfigurierbarkeit der jeweiligen Relationen und der Parameter nicht auf eine Ermittlung eines Lösungsprinzips und/oder eines Produkts ausgehend von der Vorgabe einer Anwendung beschränkt ist.

Die freie Konfigurierbarkeit lässt sich ohne weiteres sehr vorteilhaft auch dann einsetzen, wenn das Lösungsprinzip bzw. eine Produktklasse bereits bekannt ist und als Vorgabe für die Ermittlung geeigneter Produkte eingegeben wird.

Eine solche Vorrichtung zum Ermitteln mindestens eines gespeicherten Produkts bei Vorgabe eines Lösungsprinzips bzw. einer Produktklasse weist insbesondere einen Prozessor auf, der derart eingerichtet ist, dass die folgenden Verfahrensschritte durchführbar sind sowie einen Speicher, in dem die für das Durchführen des Verfahrens erforderlichen Daten speicherbar sind.

In einer Datenbank gespeicherten Produkten sind Produktparameter zugeordnet. Den Produktparametern wiederum sind Produktparameterwerte zugeordnet, die das jeweilige Produkt näher charakterisieren.

Ferner sind mögliche, d.h. zur Auswahl bereitgestellte Such-Produktparameter gespeichert. Bei Auswahl eines oder mehrerer Such-Produktparameter und der Angabe einzelner Such-Produktparameterwerte erfolgt ein Vergleich der eingegebenen Such-Produktparameterwerte mit den gespeicherten Produktparameterwerten, um das oder die entsprechenden Produkte zu ermitteln, die die Suchanforderungen erfüllen.

Die Konfiguration der einzelnen Relationen zwischen den jeweiligen Such-Produktparametern und den Produktparametern ist in diesem Fall ebenfalls frei konfigurierbar in analoger, oben beschriebener Weise.

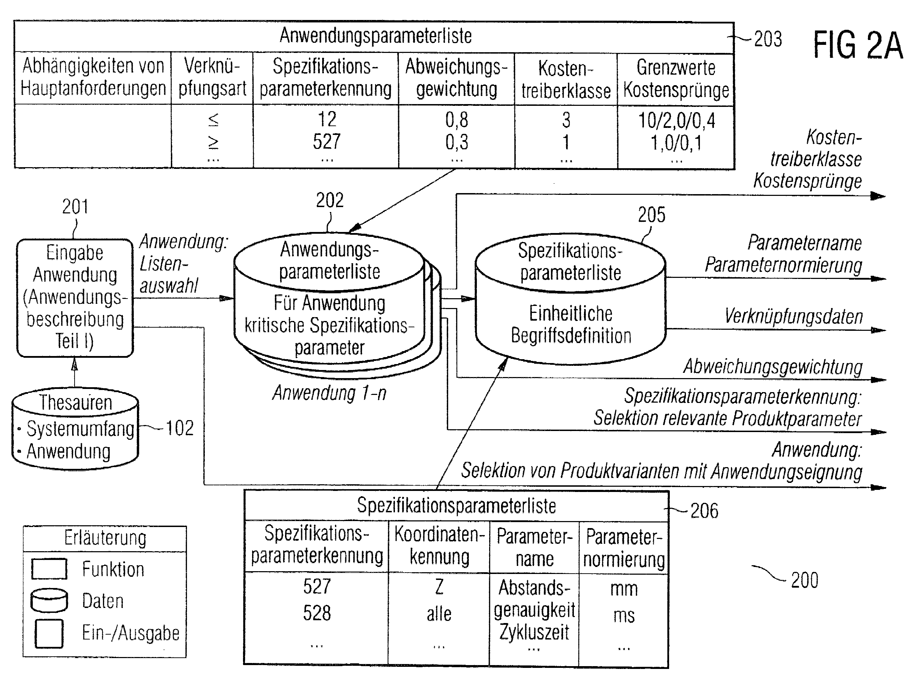

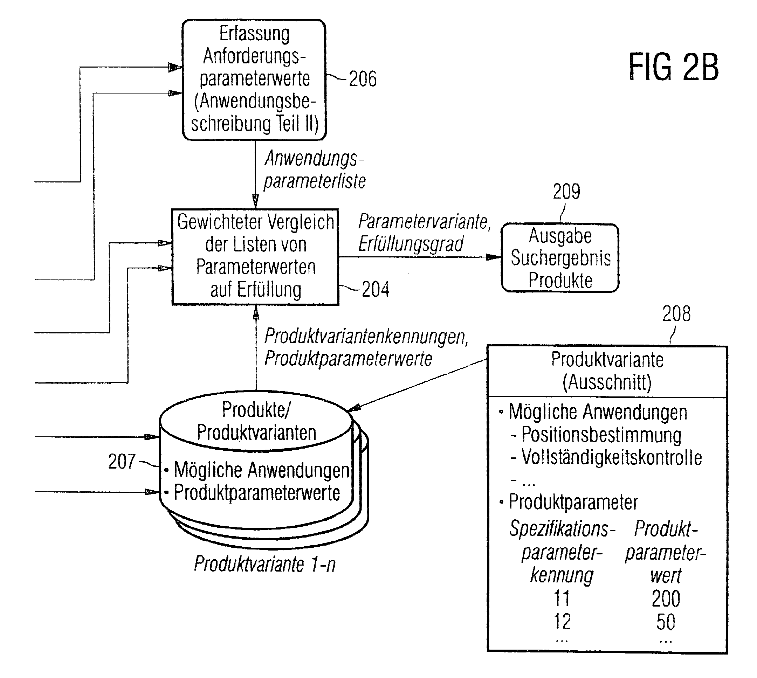

Anhand des Blockdiagramms 200 aus **Fig.2** wird das Verfahren in seinen einzelnen Schritten noch einmal detailliert erläutert.

Die gespeicherten Anwendungen 103 aus der ersten Datenbank 102 werden dem Benutzer zur Auswahl dargestellt.

Nach erfolgter Auswahl, d.h. Eingabe der gewünschten Anwendung (Block 201) wird zu der Anwendung die ihr zugeordnete Menge, d.h. eine Liste 203 von Anforderungsparametern 202 dargestellt, wie sie beispielsweise in **Fig.14** im Detail dargestellt sind.

Die Anwendungsparameterliste 203 weist gemäß diesem Ausführungsbeispiel auf:
- eine Bezeichnung des Anforderungsparameters,
- eine Angabe der jeweiligen Verknüpfungsart,
- eine Produktparameterkennung einschließlich Normierung, mit dem der Anforderungsparameter zu verknüpfen ist,
- Abhängigkeit des Anforderungsparameters als Unteranforderungsparameter von einem jeweiligen Hauptanforderungsparameter,
- eine Abweichungsgewichtung,
- eine Angabe der Kostentreiberklasse, sowie
- Angaben von Grenzwerten und Kostensprüngen.

Nach erfolgter Eingabe einer oder mehrerer Anforderungsparameterwerte zu den angegebenen Anforderungsparametern 202 (Block 206) wird ein gewichteter Vergleich durchgeführt (Block 204) mit allen entsprechenden Produktparameterwerten gespeicherter Produkte 207 mit optionalen Produktvarianten 208 entsprechend den vorgegebenen Verknüpfungen der Anforderungsparameter mit den Produktparametern 205 aus einer Produktparameter-Liste 206.

Das Vergleichsergebnis wird in Form einer Liste geeigneter Produkte ausgegeben (Block 209).

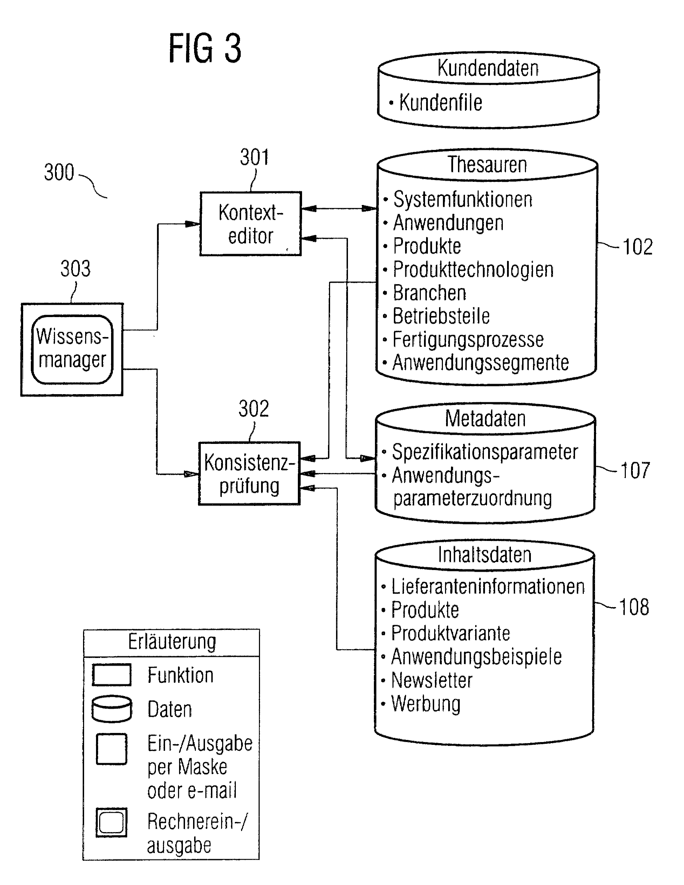

In dem Blockdiagramm 300 in **Fig.3** ist dargestellt, dass mittels eines Kontexteditors 301 und einer Konsistenzprüfungseinheit 302 unter Steuerung durch eine zentrale Steuereinheit 303 bei Definition eines neuen Anforderungsparameters oder eines neuen Produktparameters auch tatsächlich nur zulässige Anforderungsparameter bzw. zulässige Produktparameter, welche als Metadaten in der zweiten Datenbank 107 gespeichert sind, verwendet werden, wodurch die Verlässlichkeit der durchzuführenden Vergleiche gewährleistet ist.

## Patentansprüche

1. Vorrichtung zum Ermitteln mindestens eines gespeicherten Produkts und/oder mindestens eines gespeicherten Lösungsprinzips,
mit einem Prozessor, der derart eingerichtet ist, dass die folgenden Verfahrensschritte durchführbar sind sowie mit einem Speicher, in dem die für das Durchführen des Verfahrens erforderlichen Daten speicherbar sind:
• es wird eine Anwendung aus einer Menge vorgegebener möglicher Anwendungen ausgewählt,
• es wird mindestens ein möglicher gespeicherter Anforderungsparameter aus einer Mehrzahl von Anforderungsparametern, die der ausgewählten Anwendung zugeordnet sind, ausgewählt, wobei jeder Anforderungsparameter die jeweilige Anwendung charakterisiert,
• zu dem ausgewählten Anforderungsparameter wird mindestens ein Anforderungsparameterwert ermittelt,
• unter Berücksichtigung der ausgewählten Anwendung und des mindestens einen Anforderungsparameterwerts wird mindestens ein Produkt, welches in einer Datenbank gemeinsam mit mindestens einem dem jeweiligen Produkt zugeordneten Produktparameter, dem jeweils mindestens ein Produktparameterwert zugeordnet ist, gespeichert ist, ermittelt,
und/oder
unter Berücksichtigung der ausgewählten Anwendung und des mindestens einen Anforderungsparameterwerts wird mindestens ein Lösungsprinzip, welches in einer Datenbank gemeinsam mit mindestens einem dem jeweiligen Lösungsprinzip zugeordneten Lösungsparameter, dem jeweils mindestens ein Lösungsparameterwert zugeordnet ist, gespeichert ist, ermittelt,
• wobei das Ermitteln durch Vergleich des mindestens einen ausgewählten Anforderungsparameterwerts mit dem gespeicherten Produktparameterwert und/oder dem gespeicherten Lösungsparameterwert erfolgt.

2. Vorrichtung nach Anspruch 1,
bei dem der Prozessor derart eingerichtet ist, dass eine Liste einer Menge vorgegebener möglicher Anwendungen dargestellt wird und aus der Liste eine beliebige Anwendung ausgewählt werden kann.

3. Vorrichtung nach Anspruch 1 oder 2,
bei dem der Prozessor derart eingerichtet ist, dass die gespeicherten Produktparameter und/oder Lösungsparameter und/oder der Anforderungsparameter in einen vorgegebenen Vergleichsraum transformiert werden derart, dass ein Vergleich zwischen dem gespeicherten Produktparameter und/oder Lösungsparameter mit dem Anforderungsparameter möglich ist.

4. Vorrichtung nach Anspruch 3,
bei dem der Prozessor derart eingerichtet ist, dass der Vergleichsraum gleich ist
• einem Produktparameterraum, in dem der mindestens eine gespeicherte Produktparameter beschrieben wird, oder
• einem Lösungsparameterraum, in dem der mindestens eine gespeicherte Lösungsparameter beschrieben wird, oder
• einem Anforderungsparameterraum, in dem der mindestens eine gespeicherte Anforderungsparameter beschrieben wird.

5. Vorrichtung nach Anspruch 3 oder 4,
bei dem der Prozessor derart eingerichtet ist, dass sowohl die gespeicherten Produktparameter und/oder Lösungsparameter als auch die Anforderungsparameter jeweils nur Parameter aus einer vorgegebenen, gespeicherten Menge möglicher zu verwendender Parameter enthalten, welche Parameter den Vergleichsraum bilden.

6. Vorrichtung nach einem der Ansprüche 1 bis 5,
bei dem der Prozessor derart eingerichtet ist, dass
• eine Mehrzahl von Anforderungsparametern ausgewählt und eine Mehrzahl von Anforderungsparameterwerten ermittelt werden,
• eine Mehrzahl von Produktparametern und Produktparameterwerten den Produkten zugeordnet sind, und/oder
• eine Mehrzahl von Lösungsparametern und Lösungsparameterwerten den Lösungsprinzipien zugeordnet sind,
• der Vergleich derart erfolgt, dass bei mangelnder Erfüllung eines Anforderungsparameterwerts die Abweichung des entsprechenden Anforderungsparameterwerts von dem Produktparameterwert und/oder Lösungsparameterwert gemäß einer vorgegebenen Gewichtungsverteilung gewichtet wird, und
• ein gewichtetes Vergleichsergebnis ermittelt wird.

7. Vorrichtung nach einem der Ansprüche 1 bis 6,
bei dem der Prozessor derart eingerichtet ist, dass
• eine Unteranwendung aus einer Menge vorgegebener möglicher Unteranwendungen der ausgewählten Anwendung ausgewählt wird,
• es wird mindestens ein möglicher gespeicherter Anforderungsparameter aus einer Mehrzahl von Anforderungsparametern, die der ausgewählten Anwendung und Unteranwendung zugeordnet sind, ausgewählt, wobei jeder Anforderungsparameter die jeweilige Anwendung und Unteranwendung charakterisiert,
• unter Berücksichtigung der ausgewählten Anwendung und der Unteranwendung und des mindestens einen Anforderungsparameterwerts wird mindestens ein Produkt, welches in einer Datenbank gemeinsam mit mindestens einem dem jeweiligen Produkt zugeordneten Produktparameter und Produktparameterwert gespeichert ist, ermittelt,
und/oder
unter Berücksichtigung der ausgewählten Anwendung und der Unteranwendung und des mindestens einen Anforderungsparameterwerts wird mindestens ein Lösungsprinzip, welches in einer Datenbank gemeinsam mit mindestens einem dem jeweiligen Lösungsprinzip zugeordneten Lösungsparameter und Lösungsparameterwert gespeichert ist, ermittelt,
• wobei das Ermitteln durch Vergleich des mindestens einen ausgewählten Anforderungsparameterwerts mit dem gespeicherten Produktparameterwert und/oder mit dem gespeicherten Lösungsparameterwert erfolgt.

8. Vorrichtung nach einem der Ansprüche 1 bis 7,
bei dem der Prozessor derart eingerichtet ist, dass nur diejenigen Produkte und/oder Lösungsprinzipien beim Vergleich berücksichtigt werden, die für die ausgewählte Anwendung als geeignet **gekennzeichnet** sind.

9. Vorrichtung nach einem der Ansprüche 1 bis 8,
bei dem der Prozessor derart eingerichtet ist, dass
• zumindest ein Teil der Anforderungsparameter gruppiert ist in mindestens einen Hauptanforderungsparameter und jeweils mindestens einen dem Hauptanforderungsparameter zugeordneten Unteranforderungsparameter,
• für den Fall, dass der Hauptanforderungsparameter ausgewählt wird, abhängig von dem ausgewählten Hauptanforderungsparameter mindestens ein dem Hauptanforderungsparameter zugeordneter Unteranforderungsparameter als Anforderungsparameter ausgewählt wird.

10. Vorrichtung nach einem der Ansprüche 1 bis 9,
bei dem der Prozessor derart eingerichtet ist, dass zumindest
• ein Teil der Anforderungsparameter, und/oder
• ein Teil der Lösungsparameter, und/oder
• ein Teil der Produktparameter, und/oder
• ein Teil von Relationen zwischen zumindest einem Anforderungsparameter und einem Lösungsparameter und/oder zwischen zumindest einem Anforderungsparameter und einem Produktparameter,
frei von einem Benutzer und/oder einem Betreiber konfigurierbar sind.

11. Vorrichtung nach einem der Ansprüche 3 bis 10,
bei dem der Prozessor derart eingerichtet ist, dass die Art der Transformation in den Vergleichsraum frei von einem Benutzer und/oder einem Betreiber konfigurierbar ist.

12. Vorrichtung nach Anspruch 9 oder 11,
bei dem der Prozessor derart eingerichtet ist, dass zumindest ein Teil der Gruppierungen frei von einem Benutzer und/oder einem Betreiber konfigurierbar sind.

13. Vorrichtung nach einem der Ansprüche 1 bis 12, eingesetzt in einem der folgenden Gebiete:
• der Fertigungstechnik, oder
• der Prozesstechnik, oder
• der Infrastrukturtechnik.

14. Produktions- und Infrastrukturplanungseinrichtung mit einer Vorrichtung nach einem der vorangegangenen Ansprüche.

15. Verfahren zum rechnergestützten Ermitteln mindestens eines gespeicherten Produkts und/oder mindestens eines gespeicherten Lösungsprinzips,
• bei dem eine Anwendung aus einer Menge vorgegebener möglicher Anwendungen ausgewählt wird,
• bei dem mindestens ein möglicher gespeicherter Anforderungsparameter aus einer Mehrzahl von Anforderungsparametern, die der ausgewählten Anwendung zugeordnet sind, ausgewählt wird, wobei jeder Anforderungsparameter die jeweilige Anwendung charakterisiert,
• bei dem zu dem ausgewählten Anforderungsparameter mindestens ein Anforderungsparameterwert ermittelt wird,
• bei dem unter Berücksichtigung der ausgewählten Anwendung und des mindestens einen Anforderungsparameterwerts mindestens ein Produkt, welches in einer Datenbank gemeinsam mit mindestens einem dem jeweiligen Produkt zugeordneten Produktparameter, dem jeweils mindestens ein Produktparameterwert zugeordnet ist, gespeichert ist, ermittelt wird,
und/oder
unter Berücksichtigung der ausgewählten Anwendung und des mindestens einen Anforderungsparameterwerts mindestens ein Lösungsprinzip, welches in einer Datenbank gemeinsam mit mindestens einem dem jeweiligen Lösungsprinzip zugeordneten Lösungsparameter, dem jeweils mindestens ein Lösungsparameterwert zugeordnet ist, gespeichert ist, ermittelt wird,
• wobei das Ermitteln durch Vergleich des mindestens einen ausgewählten Anforderungsparameterwerts mit dem gespeicherten Produktparameterwert und/oder dem gespeicherten Lösungsparameterwert erfolgt.

16. Computerlesbares Speichermedium, in dem ein Computerprogramm zum Ermitteln mindestens eines gespeicherten Produkts und/oder mindestens eines gespeicherten Lösungsprinzips gespeichert ist, das, wenn es von einem Prozessor ausgeführt wird, folgende Verfahrensschritte aufweist:
• es wird eine Anwendung aus einer Menge vorgegebener möglicher Anwendungen ausgewählt,
• es wird mindestens ein möglicher gespeicherter Anforderungsparameter aus einer Mehrzahl von Anforderungsparametern, die der ausgewählten Anwendung zugeordnet sind, ausgewählt, wobei jeder Anforderungsparameter die jeweilige Anwendung charakterisiert,
• zu dem ausgewählten Anforderungsparameter wird mindestens ein Anforderungsparameterwert ermittelt,
• unter Berücksichtigung der ausgewählten Anwendung und des mindestens einen Anforderungsparameterwerts wird mindestens ein Produkt, welches in einer Datenbank gemeinsam mit mindestens einem dem jeweiligen Produkt zugeordneten Produktparameter, dem jeweils mindestens ein Produktparameterwert zugeordnet ist, gespeichert ist, ermittelt,
und/oder
unter Berücksichtigung der ausgewählten Anwendung und des mindestens einen Anforderungsparameterwerts wird mindestens ein Lösungsprinzip, welches in einer Datenbank gemeinsam mit mindestens einem dem jeweiligen Lösungsprinzip zugeordneten Lösungsparameter, dem jeweils mindestens ein Lösungsparameterwert zugeordnet ist, gespeichert ist, ermittelt,
• wobei das Ermitteln durch Vergleich des mindestens einen ausgewählten Anforderungsparameterwerts mit dem gespeicherten Produktparameterwert und/oder dem gespeicherten Lösungsparameterwert erfolgt.

17. Computerprogramm-Element zum Ermitteln mindestens eines gespeicherten Produkts und/oder mindestens eines gespeicherten Lösungsprinzips, das, wenn es von einem Prozessor ausgeführt wird, folgende Verfahrensschritte aufweist:
• es wird eine Anwendung aus einer Menge vorgegebener möglicher Anwendungen ausgewählt,
• es wird mindestens ein möglicher gespeicherter Anforderungsparameter aus einer Mehrzahl von Anforderungsparametern, die der ausgewählten Anwendung zugeordnet sind, ausgewählt, wobei jeder Anforderungsparameter die jeweilige Anwendung charakterisiert,
• zu dem ausgewählten Anforderungsparameter wird mindestens ein Anforderungsparameterwert ermittelt,
• unter Berücksichtigung der ausgewählten Anwendung und des mindestens einen Anforderungsparameterwerts wird mindestens ein Produkt, welches in einer Datenbank gemeinsam mit mindestens einem dem jeweiligen Produkt zugeordneten Produktparameter, dem jeweils mindestens ein Produktparameterwert zugeordnet ist, gespeichert ist, ermittelt,
und/oder
unter Berücksichtigung der ausgewählten Anwendung und des mindestens einen Anforderungsparameterwerts wird mindestens ein Lösungsprinzip, welches in einer Datenbank gemeinsam mit mindestens einem dem jeweiligen Lösungsprinzip zugeordneten Lösungsparameter, dem jeweils mindestens ein Lösungsparameterwert zugeordnet ist, gespeichert ist, ermittelt,
• wobei das Ermitteln durch Vergleich des mindestens einen ausgewählten Anforderungsparameterwerts mit dem gespeicherten Produktparameterwert und/oder dem gespeicherten Lösungsparameterwert erfolgt.
